# EUROPEAN PATENT SPECIFICATION

(11) **EP 1 623 744 B1**
(45) Date of publication and mention of the grant of the patent: **10.10.2007**
(21) Application number: 05254822.9
(22) Date of filing: 02.08.2005
(51) Int. Cl.: A63B 69/36

(54) **Performance measuring device for golf club**
Leistungsmessvorrichtung für Golfschläger
Dispositif pour mesurer la performance pour club de golf

(30) Priority: 06.08.2004 JP 2004230383
(43) Date of publication of application: 08.02.2006
(73) Proprietor: BRIDGESTONE SPORTS CO., LTD., Tokyo 140-0013 (JP)
(72) Inventor: Katayama, Shu, c/o Bridgestone Sports Co., Ltd, Tokyo (JP)
(74) Representative: Whalley, Kevin

(56) References cited:
- WO-A-03/073422
- US-A- 4 713 686
- US-A- 5 768 151
- US-A1- 2001 023 209
- US-A1- 2002 098 897

## Description

The present invention relates to a performance measuring device for measuring the motion state of a golf ball hit by a golf club, and displays the measurement result.

Conventionally, a performance measuring device for a golf club that enables the performance measurement of the golf club by taking a picture of a golf ball hit by the golf club with a camera, analyzing the initial conditions (speed, angle and amount of rotation) of the hit golf ball, based on the taken image, and calculating the carry from the analytical result by simulation, and displays the measurement result has been well known (e.g., refer to Japanese Patent No. 3,187,748).

In this case, the conventional performance measuring device including a control part having a mother board (CPU board) that is the arithmetical operation unit and an image processing board that analyzes the image of the golf ball under the flight, because it was diverted from the device intended for developing and evaluating the golf club, in which the control part was a general-purpose desktop type computer, and the mother board and the image processing board were built into a chassis (case). Moreover, it was provided with a mouse, a keyboard and a monitor, besides the above-mentioned control part.

However, the above-mentioned conventional performance measuring device was remarkably troublesome to move, when the equipment was moved to another measurement place, because the control part (desktop type computer or equipment that belongs to it) was large-scale, and the mouse, the keyboard, and the monitor were provided separately, in which the incidence of trouble due to vibrations at the time of movement or trouble due to dust was high.

Moreover, when the conventional performance measuring device for the golf club was employed, it took considerable time to connect a power cable or a communications cable, a wide place was needed to install the control part, and data must be copied onto a medium such as a flexible disk to analyze the measured data.

Attention is also drawn to the disclosure of US 2002/098897A.

This invention has been achieved in the light of the above-mentioned problems, and provides a performance measuring device for a golf club in which the movement of equipment is simple, the trouble due to vibrations at the time of movement or trouble due to dust is unlikely to occur, it takes less time to connect a power cable or a communications cable, a wide place is not needed to install the control part, and data is not required to be copied onto a medium such as a flexible disk to analyze the measured data.

According to an aspect of the present invention, a performance measuring device for a golf club that measures a motion state of a golf ball hit by the golf club and displays a measurement result, includes a camera part that takes a picture of the hit golf ball, a sensor part that detects a passage of the golf club head hitting the golf ball and sends a trigger signal of deciding a photographing timing of the golf ball to the camera part, a control box having storage unit that stores an image of the golf ball photographed by the camera part, and a USB interface that sends the image, and a mobile type computer having an arithmetical operation unit that analyzes the image sent via the USB interface of the control box, and a liquid crystal monitor that displays an analytic result. The mobile type computer includes a central processing unit (CPU) having a clock frequency of 500 MHz or more, and a basic software (OS) achieving multitask and multiwindow. Further, the sensor part includes a pair of optical sensors which are spared from each other with an interval therebetween, and the head speed of the golf club is calculated on the basis of the time for which the club head passes between both sensors and the distance between both sensors.

The performance measuring device for the golf club according to the invention once stores an image of the golf ball photographed by the camera in the control box, and transmits the image from the control box through the USB communication cable to the mobile type computer, which then receives and analyzes the image, whereby the control part of the conventional device is divided into the control box and the mobile type computer to reduce the size of the device, and the mouse, keyboard and monitor provided separately are unnecessary. Therefore, the movement of the equipment is simple, the trouble due to vibrations at the time of movement or the trouble due to dust is less likely to occur, it takes a shorter time to connect the power cable or the communication cable, the control part is installed in a narrow place, and it is unnecessary to copy data onto the media for data analysis.

The performance measuring device for the golf club according to the invention has the following effects.
1. Since the control box is employed mainly as the data storage part and the USB interface, and the mobile type computer has a function of analyzing the measured data and an image display function, the device of the invention is smaller and lighter than the conventional device, the mouse, keyboard and monitor provided separately are unnecessary, and the number of cables is reduced. Therefore, the movement of the equipment is simple, and the trouble due to vibrations at the time of movement or the trouble due to dust is less likely to occur. Also, it takes a shorter time to connect the cables, the control part is installed in a narrow place, and it is unnecessary to copy data onto the media for data analysis.
2. Since the measured data is saved in the mobile type computer, when the data analysis is made, it is unnecessary to save the data on the media as conventionally performed, whereby the data analysis is directly made on the mobile type computer employing the software.
3. When the measurement of data is not made, the mobile type computer is carried to another place and utilized for another business, making effective use of the device.

The invention will be further described with reference to the accompanying drawings, in which
Fig. 1 is a schematic view showing one example of a performance measuring device of a golf ball according to the invention; and
Fig. 2 is a block diagram of the device as shown in Fig. 1.

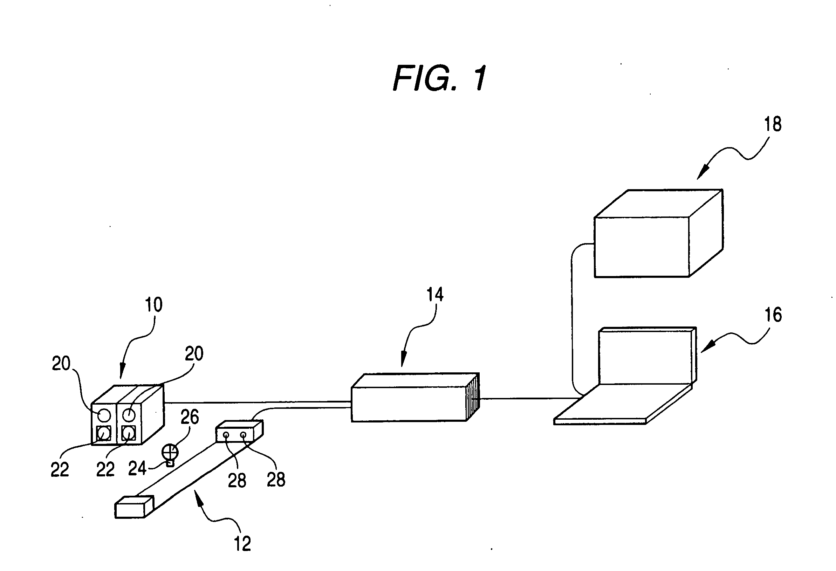

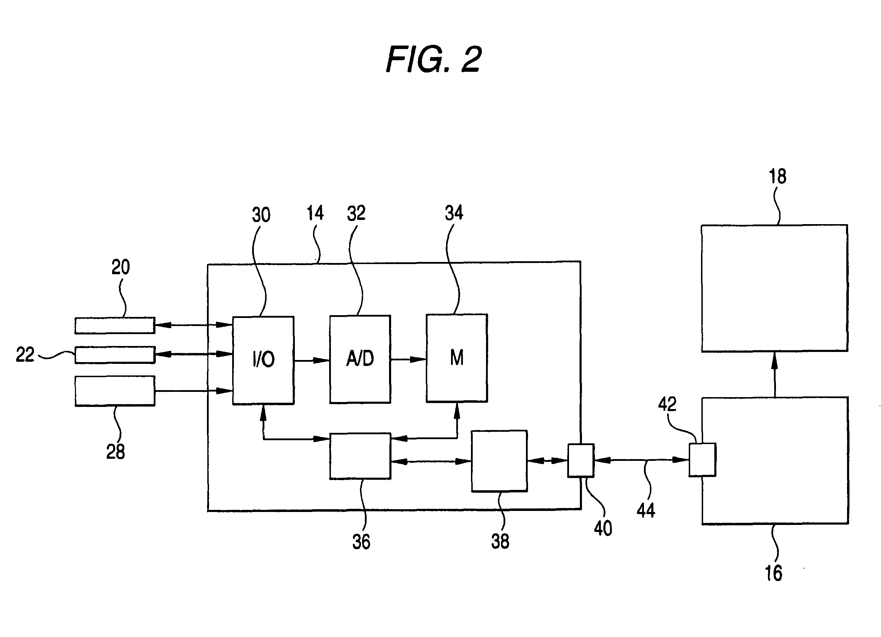

The preferred embodiments of the present invention will be described below with reference to the drawings. However, this invention is not limited to those embodiments. Fig. 1 is a schematic view showing one example of a performance measuring device of golf ball according to the invention. Fig. 2 is a block diagram of the device as shown in Fig. 1. This device includes a camera part 10, a sensor part 12, a control box 14, a mobile type computer 16, and a printer part 18.

The camera part 10 includes a pair of cameras 22 having a stroboscope 20 which are spaced from each other with a preset distance, for example, from 100 to 250mm, in a direction along the fly ball line of the hit golf ball. In this case, the distance between the golf ball 26 on a set tee 24 and a camera 22 closer to this golf ball 26 in the direction along the fly ball line of the golf ball may be set to from 50 to 300mm, for example.

The sensor part 12 includes a pair of optical sensors 28 composed of a light emitting part and a light receiving part which are spaced from each other with an interval of about 70mm, for example. In this case, the distance between the golf ball 26 on the set tee 24 and an optical sensor 28 closer to this golf ball 26 in the direction of passage of the golf club may be preferably set to about 40 mm.

When the player faces the camera 22, and hits the golf ball 26 set on the tee 24 with the golf club, one pair of optical sensors 28 detect a passage of the golf club prior to hitting, and the time for which the club head passes between both sensors 28 is measured, and the head speed is calculated from the relationship with the distance between both sensors 28. Then, a trigger output for deciding the photographing timing of the golf ball by receiving a detection signal of the sensor 28 closer to the ball 26 acts on the camera 22 and the stroboscope 20 of the camera part 10. In this case, the above one series of operations is performed under the control of the control box 14 and the mobile type computer 16.

The trigger output is given by measuring beforehand a plurality of head speeds to be applied, and setting a delay time and a shutter interval time of both cameras 22 corresponding to each head speed on the mobile type computer 16. The delay time as used herein means the time since the sensor 28 detects the passage of the club head until the shutter and stroboscope 20 of the camera 22 are activated. The camera 22 is preferably a CCD camera having a shutter speed from 1/10000 to 1/200000 sec. The image of the golf ball photographed by the camera part 10 is sent to the control box 14.

The control box 14 includes a signal input/output part 30, a signal conversion part 32 for converting an analog signal into digital form, a data storage part 34, a signal image control part 36, a USB interface 38 and a USB terminal 40, as shown in FIG. 2. The image of the golf ball photographed by the camera part 10 is stored via the signal input/output part 30 and the signal conversion part 32 and the data storage part 34. The delay time and the shutter interval time associated with the trigger output corresponding to each head speed are saved in the mobile type computer 16.

The mobile type computer 16 is a general-purpose notebook type personal computer, for example, and includes an arithmetical operation processing part for analyzing the image sent via the USB interface of the control box, a liquid crystal monitor for displaying its analytic result, cursor control means such as a keyboard, a touch pad or the like, and a USB terminal 42. The arithmetical operation processing part of the mobile type computer 16 includes a CPU (Central Processing Unit) having a clock frequency of 500MHz or more, preferably 1 GHz or more, and the basic software (e.g., Windows®) for implementing the multitask and multiwindow.

The printer part 18 may be a general-purpose ink jet printer, or a laser printer, for example.

In making the performance measurement for the golf club with the device of this embodiment, when the golf ball 26 set on the tee 24 is hit by the golf club, the sensor part 12 detects the passage of the club head and sends a detection signal through the control box 14 to the mobile type computer 16. The mobile type computer 16 computes the head speed from the detection signal, and sends a trigger signal corresponding to the acquired head speed to the camera 22 and the stroboscope 20 of the camera part 10. After the golf ball is hit by the club head, the golf ball is photographed at the moment when it comes in front of each camera 22. The photographed image is stored for each kind of club and each setting condition in the data storage part 34.

The image stored in the data storage part 34 is transferred through the signal image control part 36 via the USB interface 38 to the USB terminal 40, and then via the USB communication cable 44 and the USB terminal 42 to the mobile type computer 16 to perform the analytic processing. The signal image control part 36 performs the input/output of the camera image, a stroboscopic flash timing process, the write and read control of the image memory, and the centralized control of image output to the USB interface.

In this device, a USB 2.0 having a transfer rate of 480Mbps is employed as the USB interface 38. That is, though a USB 1.1 having a transfer rate of 40Mbps may be employed as the USB interface 38 to attain a high transfer rate, the use of USB 2.0 can greatly increase the transfer rate. The USB (Universal Serial Bus) is the interface standard capable of connecting various peripheral devices with a common connector.

The mobile type computer 16 internally includes the software for calculating and displaying various characteristics regarding the hit ball and the golf club. The calculation and display of the numerical values of head speed, initial speed of the hit ball, delivery angle (upper direction to the horizontal line, left and right direction to the reference line), back spin amount, and side spin amount, calculation of a trajectory and a carry, display of the image based on the calculation results, and accumulation of the analytic results are made. Also, the printer part 18 is connected to the mobile type computer 16, as needed, to print various calculation results and images. The above various characteristics can be calculated by an image processing method using the image of hit ball, for example.

## Claims

1. A performance measuring device for a golf club that measures a motion state of a golf ball hit by the golf club and displays a measurement result, comprising:
a camera part (10) for taking a picture of the hit golf ball;
a sensor part (12) for detecting a passage of the golf club head hitting the golf ball and sending a trigger signal of deciding a photographing timing of the golf ball to the camera part;
a control box (14) having:
storage means (34) for storing an image of the golf ball photographed by the camera part; and
a USB interface (38) for sending the image; and
a mobile type computer (16) having:
an arithmetical operation unit for analyzing the image sent via the USB interface of the control box; and
a liquid crystal monitor for displaying an analytic result,
wherein:
the mobile type computer comprises: a central processing unit (CPU) having a clock frequency of 500 MHz or more; and a basic software (OS) achieving multitask and multiwindow; and
the sensor part (12) includes a pair of optical sensors (28) which are spaced from each other with an interval therebetween, and the head speed of the golf club is calculated on the basis of the time for which the club head passes between both sensors (28) and the distance between both sensors.

2. A performance measuring device as claimed in claim 1, wherein the USB interface of the control box is a USB 2.0 having a transfer rate of 480 Mbps.

3. A performance measuring device as claimed in claim 1 or 2, wherein the clock frequency of the CPU of the mobile type computer is 1 GHz or more.

4. A performance measuring device as claimed in any of claims 1 to 3, further comprising:
a printer part (18) for printing the analytic result of the arithmetical operation of the mobile type computer.

## Patentansprüche

1. Leistungsmessvorrichtung für einen Golfschläger, die einen Bewegungszustand eines durch den Golfschläger getroffenen Golfballs misst und ein Messergebnis anzeigt, mit:
einem Kamerateil (10) zum Aufnehmen eines Bildes des getroffenen Golfballs;
einem Sensorteil (12) zum Erfassen eines Durchlaufs des Golfschlägerkopfes, der den Golfball trifft, und Senden eines Auslösesignals zum Festlegen eines Photographiertimings des Golfballs zu dem Kamerateil;
einem Steuerkasten (14), mit:
Speichermitteln (34) zum Speichern eines Bildes des durch den Kamerateil photographierten Golfballs; und
einer USB-Schnittstelle (38) zum Senden des Bildes; und
einem mobilen Computer (16), mit:
einer Rechenbetriebseinheit zum Analysieren des über die USB-Schnittstelle des Steuerkastens gesendeten Bildes; und
einem Flüssigkristallmonitor zum Anzeigen eines analytischen Ergebnisses,
wobei:
der Computer vom mobilen Typ umfasst: eine zentrale Verarbeitungseinheit (CPU) mit einer Taktfrequenz von 500 MHz oder mehr; und eine Basissoftware (OS), die Mehrprozessbetrieb (multitask) und Mehrfensterbetrieb (multiwindow) erzielt; und
der Sensorteil (12) ein Paar von optischen Sensoren (28) aufweist, die voneinander mit einem Intervall dazwischen beabstandet sind, und die Kopfgeschwindigkeit des Golfschlägers auf der Grundlage der Zeit, in der der Schlägerkopf zwischen beiden Sensoren (28) durchläuft, und dem Abstand zwischen beiden Sensoren berechnet wird.

2. Leistungsmessvorrichtung gemäß Anspruch 1, bei der die USB-Schnittstelle des Steuerkastens ein USB 2.0 mit einer Transferrate von 480 Mbps ist.

3. Leistungsmessvorrichtung gemäß Anspruch 1 oder 2, bei der die Taktfrequenz der CPU des Computers vom mobilen Typ gleich 1 GHz oder mehr ist.

4. Leistungsmessvorrichtung gemäß einem der Ansprüche 1 bis 3, ferner mit:
einem Druckerteil (18) zum Drucken des analytischen Ergebnisses der Rechenoperation des Computers vom mobilen Typ.

## Revendications

1. Dispositif de mesure de performance pour un club de golf qui mesure un état de mouvement d'une frappe de balle de golf par le club de golf et affiche un résultat de mesure, comprenant:
une partie caméra (10) pour prendre une image de la balle de golf frappée;
une partie capteur (12) pour détecter un passage de la tête du club de golf frappant la balle de golf et envoyer un signal de déclenchement de décision d'une temporisation de photographie de la balle de golf à la partie caméra;
une boite de contrôle (14) ayant:
un moyen de stockage (34) pour stocker une image de la balle de golf photographiée par la partie caméra; et
une interface USB (38) pour envoyer l'image; et
un ordinateur de type mobile (16) ayant:
une unité d'opération arithmétique pour analyser l'image envoyée via l'interface USB de la boîte de commande; et
un moniteur à cristaux liquides pour afficher un résultat analytique,
dans lequel:
l'ordinateur de type mobile comprend: une unité de traitement central (CPU) ayant une fréquence d'horloge de 500 MHz ou plus; un logiciel d'exploitation (OS) réalisant une multitâche et une multifenêtre; et
la partie capteur (12) comprend une paire de capteurs optiques (28) qui sont espacés l'un de l'autre avec un intervalle entre, et la vitesse de la tête du club de golf est calculée sur la base du temps pendant lequel la tête du club passe entre les deux capteurs 28 et de la distance entre les deux capteurs.

2. Dispositif de mesure de performance selon la revendication 1, dans lequel l'interface USB de la boite de contrôle est une interface USB 2.0 ayant un débit de transfert de 480 Mbps.

3. Dispositif de mesure de performance selon la revendication 1 ou 2, dans lequel la fréquence d'horloge du CPU de l'ordinateur de type mobile est 1 GHz ou plus.

4. Dispositif de mesure de performance selon l'une quelconque des revendications 1 à 3, comprenant en outre:
une partie d'imprimante (18) pour imprimer le résultat analytique de l'opération arithmétique de l'ordinateur de type mobile.
